# EUROPEAN PATENT APPLICATION

(11) **EP 1 265 150 A1**
(43) Date of publication of application: **11.12.2002**
(21) Application number: 00909649.6
(22) Date of filing: 15.03.2000
(51) Int. Cl.: G06F 15/00

(54) **JOB IDENTIFYING METHOD AND DEVICE**

(71) Applicant: Hitachi, Ltd., Chiyoda-ku, Tokyo 101-8010 (JP)
(72) Inventor: KUROSE, Hideto, Software Division, Hitachi, Ltd., Yokohama-shi, Kanagawa 244-8555 (JP); HIRABAYASHI, Motoaki, Software Div., Hitachi, Ltd., Yokohama-shi, Kana gawa 244-8555 (JP)
(74) Representative: Strehl Schübel-Hopf & Partner
(86) International application number: JP0001575
(87) International publication number: WO01069401

(57) **Abstract**

The object of the present invention is to provide a job transfer scheme between computers in which even when a job identifier of a job in a server computer is not returned to a client computer due to a network failure or the like, the client computer can recognize a status of the job.

In addition to a job identifier generated by the server computer, a job identifier generated by the client computer is added upon registration of the job.

When the job identifier to be returned from the server computer is unknown, the job identifier in the server computer is obtained using the job identifier in the client computer.

## Description

### TECHNICAL FIELD

The present invention relates to a job identifying method in a client-server system and, in particular, to a job identifying method and a job identifying apparatus in which a job of which processing is requested can be easily identified at occurrence of a failure.

### BACKGROUND ART

There has been known a job transfer scheme in which a batch job is entered from a computer to another computer to be executed therein. A batch job is useful in a situation in which while a job is being executed, it is desired to execute another job. When a job (an application) is entered, the job is once registered to a queue. After this point of time, another job (application) can be entered. A system having received the registered jobs sequentially obtains each of the jobs from the queue and executes the job. To implement a fixed and automatic job system to execute, for example, jobs in a daily or monthly interval such as a job of data summation, it is absolutely necessary to execute batch jobs of this kind.

To implement such a batch job execution system, a computer disposed as a server to execute batch jobs is provided with a queue to which jobs are to be registered. The server computer assigns job identifiers (ID) to the jobs registered to the queue to control the jobs in a centralized way. When a computer arranged as a client registers a job to the server computer, the server computer returns the job identifier assigned to the job to the client computer. Thereafter, the client computer uses the job identifier to reference a status of the job, to terminate the job, and to change the job. The batch job execution system of this kind has been known.

JP-A-6-149739 describes an example in which a client sends a job request via e-mail to a job server, receives a job identifier from the job server, and then uses the job identifier for an enquiry of an execution status of the job.

The server computer assigns unique identifiers for the centralized control operation for the following reason. The identifiers are necessary to identify jobs registered from a plurality of clients.

### DISCLOSURE OF INVENTION

In the batch job execution system, the server computer assigns a job identifier to a job of which processing is requested by a client computer, and then the server computer returns the job identifier to the client computer. The client computer having issued the request uses thereafter the job identifier, for example, to refer to a status of the job. Therefore, when a network failure or the like occurs before the server computer returns the job identifier to the client computer, the job identifier cannot be returned to the client computer in some cases. In this situation, the job identifier of the job is unknown to the client computer, and hence the client computer cannot obtain a status of the job having been registered to the server computer. Additionally, when the job identifier is not returned to the client computer, the server computer executes the job regardless of recognition of the condition by the client computer. Whether or not the job has been normally executed is unknown to the client computer. In consequence, there arises a problem that the client computer enters the same job again and the job is twice executed.

At occurrence of such a situation, the operator confirms the jobs executed by the server computer to determine whether or not the pertinent job is to be again executed. If the job is to be again executed, the operator enters the job from the client computer.

The job identifier becomes unknown because of a network failure, a failure in the server computer, or a failure in the client computer. Particularly, in a system using the internet, failures may possibly occur depending on communication quality of the network and/or concentrated accesses issued from many users to the server computer.

It is therefore an object of the present invention in which in a job transfer scheme between computers, even when a job identifier of a job is not returned to a client computer due to, for example, a network failure, the client computer can recognize a status of the job.

To achieve the object according to the present invention, there is provided a job transfer method in which a client sends a job processing request to a server to register the job for execution thereof. The job transfer method includes the steps of creating a unique external identifier of a job in the client, placing the external identifier created for the job in the request and transmitting the request from the client to the server, registering the external identifier of the job together with the job in the server, the external identifier being transmitted from the client; placing, when the client sends a request to the server to refer to a status of the job, the job external identifier in the request and transmitting the job external identifier from the client to the server, identifying by the server a job according to the job external identifier sent from the client, and transmitting the status of the job thus identified from the server to the client.

Through the above-mentioned procedure, the job external identifier can be registered to the server computer simultaneously at the registration of the job from the client. This consequently removes the disadvantage in which only the job is registered and the job of which processing has been requested from the client computer cannot be recognized due to a network failure or the like.

According to the present invention, at least one of the external job identifier of a job of which processing is requested to the server and the job includes an identifier of the client such as an internet protocol (IP) address. Therefore, the external identifier can be uniquely assigned in a case in which a plurality of clients exist.

Resultantly, even if same external identifiers are used by a plurality of clients to register jobs, the server can uniquely identify each job.

### BRIEF DESCRIPTION OF DRAWINGS

Fig. 1 is a block diagram showing a configuration example of a system according to the present invention.

Fig. 2 is a block diagram showing a configuration example including a client and a server.

Fig. 3 is a diagram showing communication data formats.

Fig. 4 is a diagram showing communication data.

Fig. 5 is a diagram showing an operation sequence in which a client sends a processing request to a server.

Fig. 6 is a diagram showing an operation sequence in which delivery of a response data stream (referred to as RES hereafter) is set while the server is in process.

Fig. 7 is a flowchart showing a request analysis procedure.

Fig. 8 is a diagram showing a display example of job statuses.

Fig. 9 is a block diagram showing an example in which the present invention is applied to an electronic commerce system.

### BEST MODE FOR CARRYING OUT THE INVENTION

Referring to the drawings, description will be given of an embodiment according to the present invention.

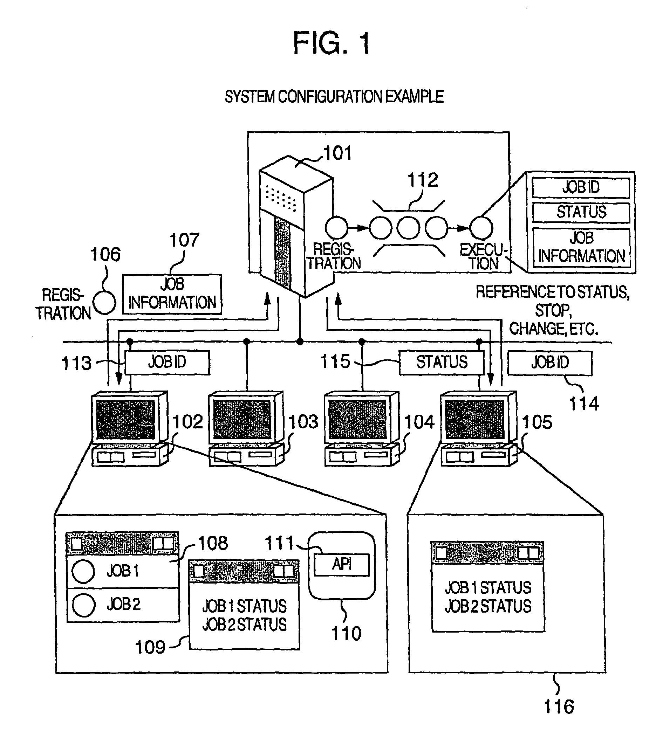

Fig. 1 shows an example of a system configuration according to the present invention in a block diagram. The system of Fig. 1 includes a server computer 101 and client computers 102 to 105. The server computer 101 and the client computers 102 to 105 are connected to a network to communicate various information therebetween. Each client computer can achieve a processing in which the client computer registers a job 106 to the server computer, the server computer executes the job in a batch processing manner, and results of the processing are returned to the client computer. In the registration of a job, a program executing instruction, and job information 107 which are described in a job control language or script are transferred to the server computer.

The server computer and the respective client computers may use mutually different operating systems. The client computers may include various types of clients such as a job launcher client 108 and a www browser client 109. The job registration may be conducted using a predetermined application program interface 111 from a user program 110 of any type. To register a job from a client computer to a server computer, there may be used, for example, an operation to input a predetermined command or an operation to instruct the registration using a predetermined graphical user interface (GUI). The job registered to the server computer is once registered to a queue 112. The client computer can issue an enquiry to the server computer to refer to an execution status of the job, to terminate the job, or to change the job. At the registration of a job, the client computer receives a job identifier 113 corresponding to the job from the server computer. The job identifier is assigned by the server computer. By specifying a job identifier 114, the client computer can issue an enquiry to the server computer to receive a status 115 of the job therefrom. The client computer can display the status on a screen 116 of the client computer.

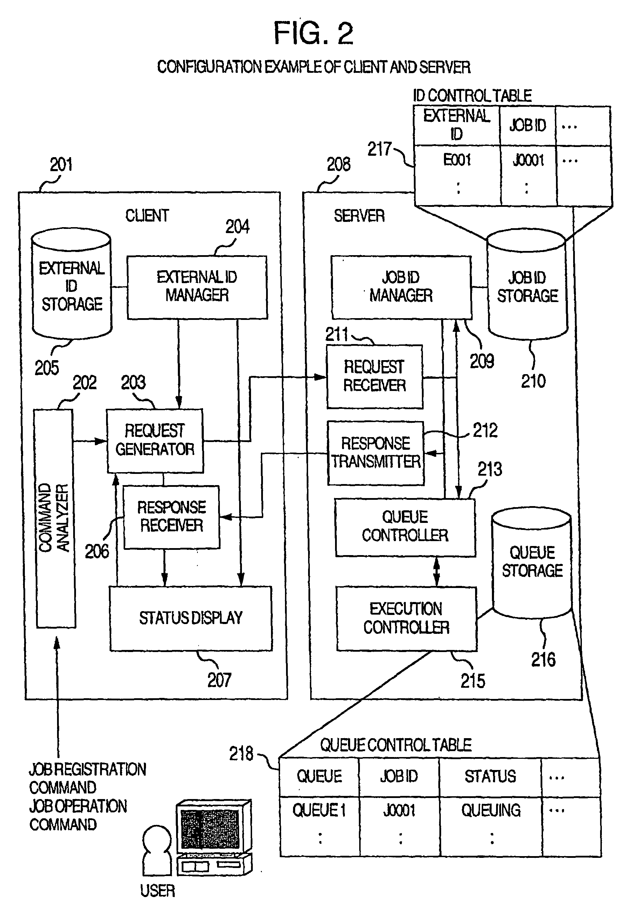

Fig. 2 shows a configuration including a client and a server for the job registration method and the job identification method. A client 201 includes a command analyzer 202, a request generator 203, an external identifier manager 204, an external identifier storage 205, a response receiver 206, and a status display 207. A server 208 includes a job identifier manager 209, a job identifier storage 210, a request receiver 211, a response transmitter 212, a queue controller 213, an execution controller 215, a queue storage 216, a identifier control table 217 stored in the job identifier storage 210, and a queue control table 218 stored in the queue storage 216.

The request generator 203 of the client 201 generates a request data stream (REQ) according to an instruction from the user. When the user indicates "registration", the request generator 203 adds an external identifier, assigned by the external identifier manager 204, to the REQ and then sends the REQ to the request receiver 211 of the server 208. The external identifier includes a host identifier to identify the client and a control number of the client. The external identifier is stored in the external identifier storage 205 and will be used later if the client become inoperable due to a failure thereof. The external identifier is not assigned using a particular value when the client is re-started, but is generated by the client using data of the date and/or a sequential number. The external identifier is assigned to prevent duplication thereof with any existing identifier already in use.

The request receiver 211 of the server 208 analyzes the request data stream received from the client 201 to execute processing for each request type of the request data stream. The request type includes "registration", "termination", "change", "reference", and "enquiry". When the request received by the request receiver 211 indicates "registration", the job identifier manager 209 assigns a job identifier thereto and acquires a job identifier stored in the identifier table 217 of the job identifier storage 210 with a correspondence established between the job identifier and the external identifier. The request receiver 211 adds the job identifier to job information, and the queue controller 213 registers the job information to the queue storage 216. The job information is controlled using the queue control table 218. The job information in the request data stream for the registration includes a job name, an execution program name, parameters and environmental variables necessary for the execution. The job identifier is stored in the job identifier storage 210 and is controlled such that the job identifier includes a unique value in any situation. After the job is registered, the response transmitter 212 returns a response data stream (RES) to the response receiver 206 of the client 201. The response data stream includes the job identifier.

The status display section 207 of the client 201 generates a request data stream for "reference". The request data stream includes a job identifier of a job for the reference request. Having received the reference request, the request receiver 211 of the server 208 issues an enquiry for an execution status of the job via the queue controller 213 to the execution controller 215. The execution controller 213 acquires an execution status of the job from the queue control table 218 in the queue storage 216 and sends a response data stream via the response transmitter 212 to the response receiver 206 of the client 201. The response data stream includes the job execution status and job information. The received response data stream is passed to the status display section 207, which then displays the status of the job on its screen.

When the client 201 cannot receive the job identifier due to, for example, a network failure, the client 201 uses an external identifier to issue an enquiry for the job. For a job of which the job identifier is unknown, the request generator 203 of the client 201 generates a request data stream to send an enquiry for the job identifier. The request data stream includes the external job identifier of the job. Having received the enquiry for the job identifier, the request receiver 211 of the server 208 issues an associated request to the job manager 209. The job identifier manager 209 acquires the job identifier of the job from the identifier control table 217 and then the response transmitter 212 sends a response data stream to the response receiver 206 of the client 201. The response data stream includes the job identifier. Having received the job identifier, the response receiver 206 can ask the request generator 203, using the job identifier, to generate a request for the execution status of the job.

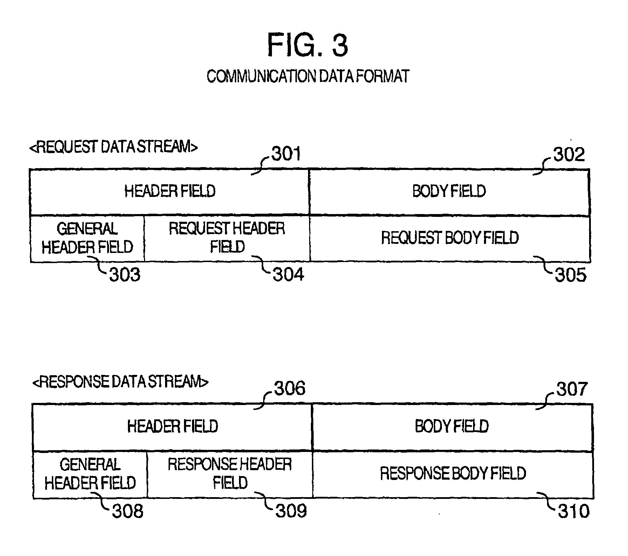

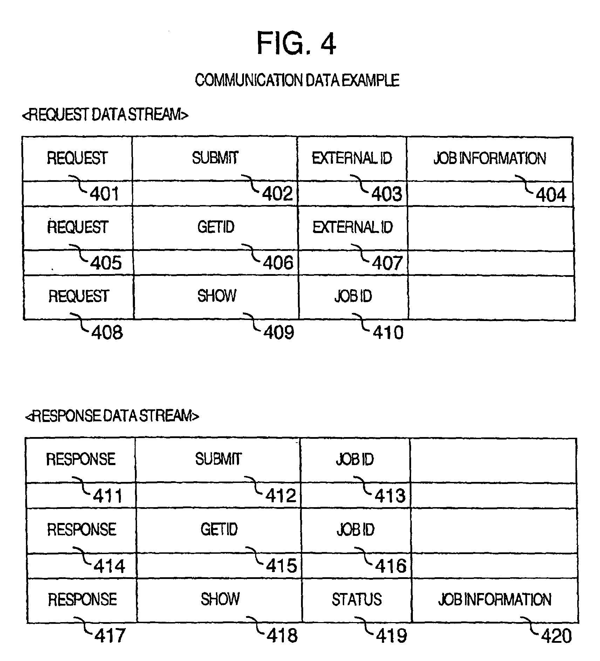

Fig. 3 shows a format of data communicated between the client and the server. Fig. 4 shows an example of communication data between the client and the server. A request data stream includes a header field 301 and a body field 302. The header field 301 includes a general header field 303 and a request header field 304. The body field 302 includes a request body field 305 including request data parameters and the like.

In the request data stream for "registration" shown in Fig. 4, an identifier indicating a type of the data stream, i.e., "request" 401 is set to the general header field 303 in this case. An identifier of a request type, i.e., "submit" 402 for the registration is set to the request header field 304 in this case. Moreover, an external identifier 403 and job information 404 are set to the request body field 305.

For a request data stream for the enquiry of a job identifier, an identifier indicating the type of the data stream, i.e., "request" 405 is set to the general header field 303 in this case. An identifier of a request type, i.e., "getid" 406 for the "job identifier enquiry" is set to the request header field 304 in this case. Moreover, an external identifier 407 is set to the request body field 305.

For a request data stream for "reference", an identifier of the data stream, i.e., "request" 408 is set to the general header field 303 in this case. An identifier of the request type, i.e., "show" 409 for the reference is set to the request header field 304 in this case. Moreover, a job identifier 410 is set to the request body field 305.

The response data stream includes a header field 306 and a body field 307. The header field 306 includes a general header field 308 and a response header field 309. The body field 307 includes a response body field 310 including response data parameters and the like.

For a response data stream for "registration", an identifier indicating a type of the data stream "response" 411 is set to the general header field 308 in this case. An identifier of a response type, i.e., "submit" 412 for the registration is set to the response header field 309 in this case. Moreover, the response body field 312 includes a job identifier 413.

For a response data stream for an enquiry of a job identifier, an identifier of the data stream, i.e., "response" is set to the general header field 308 in this case. An identifier of a response type, i.e., "getid" for the job identifier enquiry is set to the response header field 309 in this case. Moreover, the response body field 310 includes a job identifier 416.

For a response data stream for "reference", an identifier indicating the type of the data stream, i.e., "response" 417 is set to the general header field 308 in this case. An identifier of a response type, i.e., "show" 418 for the reference is set to the response header field 309 in this case. Moreover, the response body field 310 includes a job status 419 and job information 420.

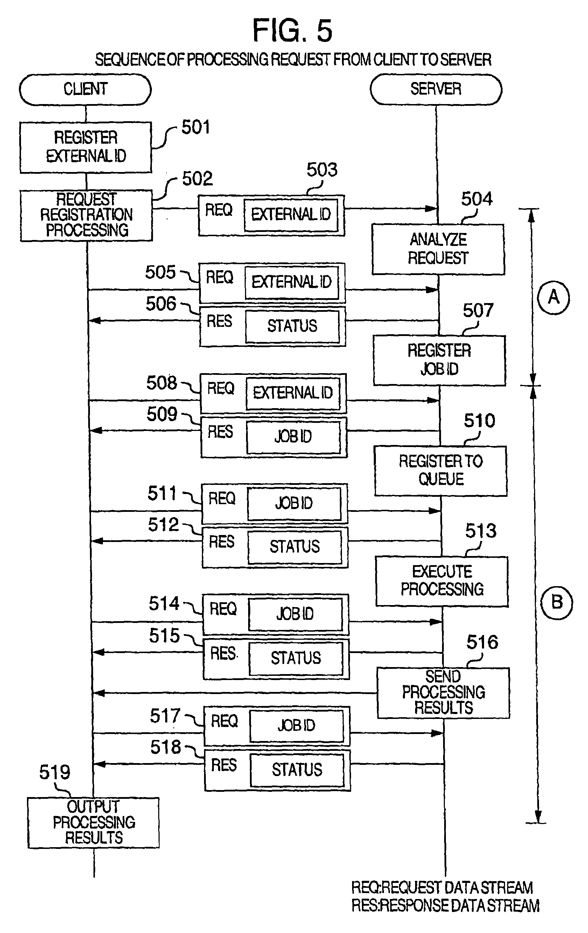

Fig. 5 shows a sequence of operation for the client to issue a processing request to the server. To register a job to the server, the client registers an external identifier within the client (step 501) and issues a job registration request (step 502). For the request, the client sets the external identifier to the request data stream (503). Having received the request data stream, the server analyzes the request (step 504) and registers a job identifier within the server (step 507). From when the client issues the job registration request to when the server conducts the job identifier registration (indicated by an arrow A in Fig. 5), the client can issue an enquiry regarding the job to the server using the external identifier. In the example of Fig. 5, the client issues an enquiry using a request data stream including an external identifier designated by the client and the server returns a response data stream including a status of the job to the client (step 506).

If the server has already registered the job identifier (step 507), the server receives the enquiry using the external identifier from the client (step 508) and sets the registered job identifier to a response data stream (506) and then returns the response data stream to the client. Having received the response data stream thereafter, the client can issue an enquiry for the job using the job identifier.

For a job status enquiry issued with a job identifier from the client (steps 511, 514, and 517), the server returns a response data stream (512) indicating a queuing status to the client if the job has been registered to the queue (step 510). If the job is in execution (step 513), the server sends a response data stream (515) indicating that the job is in execution to the client.

After the job is completely processed and the server sends results of the processing to the client (step 516), the server sends a response data stream (518) indicating a status of termination to the client.

In this example, the client having received the job status displays the results of processing on a screen (step 519).

During a period of time in which information regarding the job is being kept in the server (indicated by an arrow B in Fig. 5) after the server registers the job identifier, the client can issue a request for the job using the job identifier to the server. In the period indicated by the arrow B, the client can also use the external identifier for the enquiry.

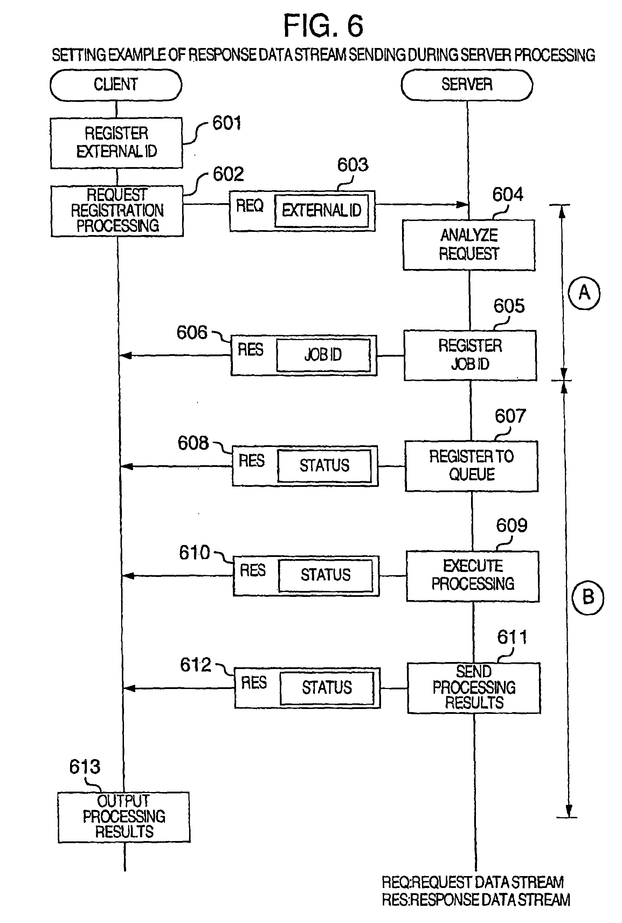

Fig. 6 shows an example in which a response data stream is sent to the client when the server is in process.

At a job registration request (step 602), the client can set a mode in which at start or termination of each processing, the server informs the client of a status of the job, using a response data stream. This becomes possible when the client sets information, for example, of a client to which the status is to be informed and a port number associated with the client, to job information of a request data stream (603) at the job registration request. By appropriately setting the job information, the client can also select a condition to inform the client of the job status, the condition indicating a status of processing in the server.

In the example of Fig. 6, the client sets an external identifier (step 601) to send the external identifier using a request data stream (603) of a registration request (step 602); moreover, a status of the job is informed to a requester of the job at registration of a job identifier (step 605), at registration of a queue (step 607), at execution of processing (step 609), and at delivery of results of processing. Therefore, necessary information of a status of the job can be obtained as a default value without delivering a request data stream from the client to the server in this example, and hence the network load can be reduced. Additionally, when necessary, using the external identifier or the job identifier, an enquiry to the server can be issued for necessary information of the job.

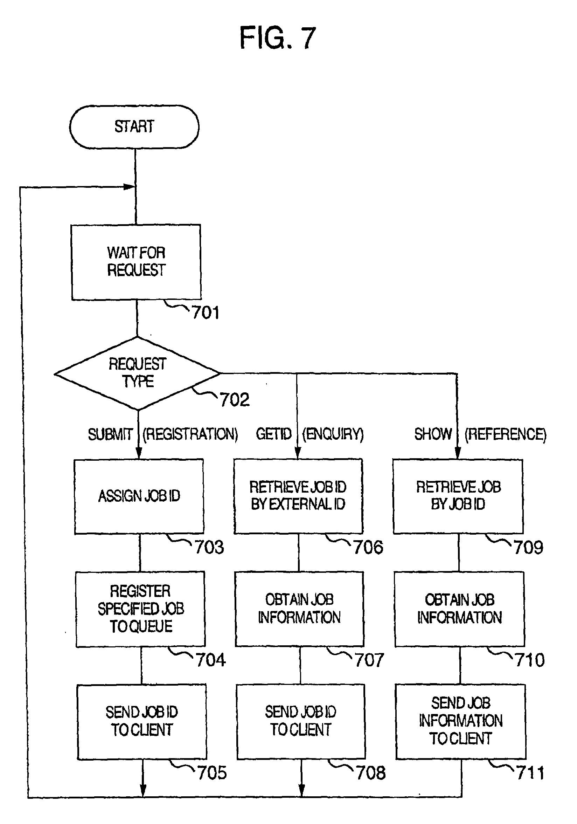

Fig. 7 shows a request analysis procedure in a flowchart. In a request waiting state (step 701), when a request is received, processings are assigned for each request type (step 702). For a registration request, a job identifier is assigned (step 703) and is stored in the identifier storage with a correspondence established between the job identifier and an external identifier. Furthermore, a job specified by the request is registered together with the job identifier to a queue (step 704). After the job is registered to the queue, the assigned job identifier is returned to the client (step 705).

For a job identifier enquiring request, the job identifier manager 209 retrieves a job for an external identifier specified in the request by referring to the identifier control table 217 in the job identifier storage 210 (step 706). When the job is detected, the job identifier manager 209 acquires a job identifier for the job (step 707) and returns the job identifier to the client (708).

For a reference request, the queue controller 213 retrieves a job using a job identifier specified in the request (step 709). When the job is detected, the queue controller 213 acquires job information of the job from the queue control table 218 in the queue storage 216 (step 710) and returns the job information to the client (step 711).

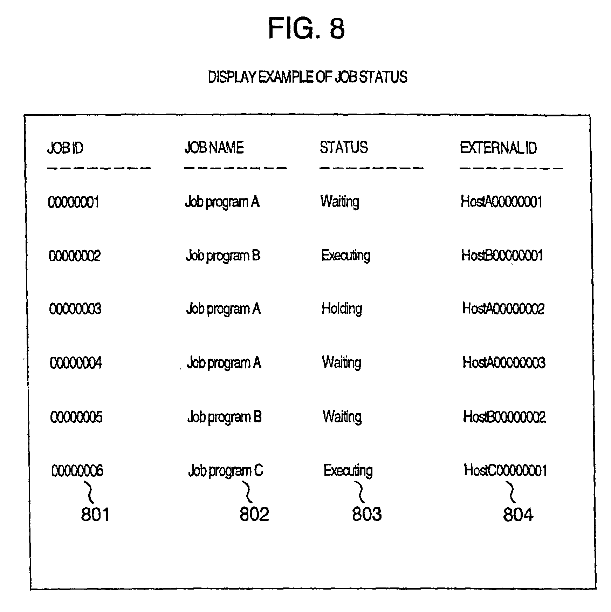

Fig. 8 shows an example of job statuses displayed in a client. This is a display example of a table including a job identifier 801, a job name 802, a job status 803, and an external identifier 804. Using this table, the user can recognize execution statuses of the registered jobs.

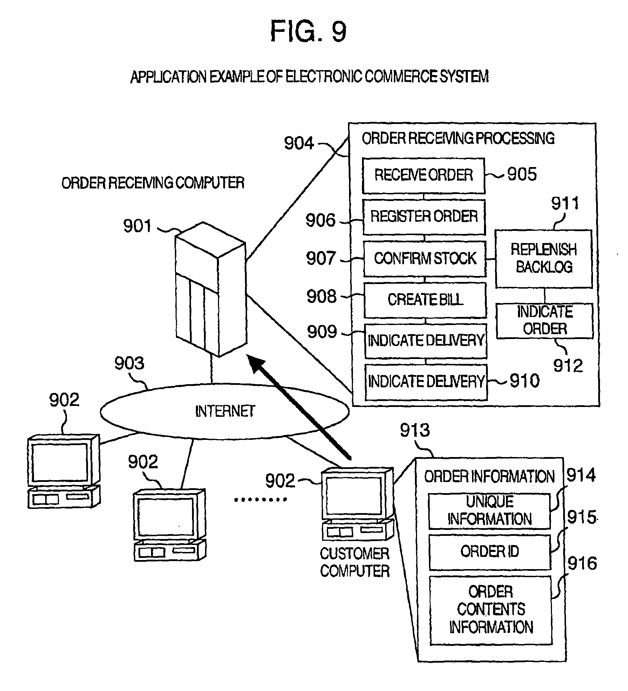

Fig. 9 is an embodiment in which the present invention is applied to an electronic commerce system. In an operation to order items from a customer computer 902 to an order receiving computer 901, the customer computer 902 delivers order information 913 via an internet 903 to the order receiving computer 901. The order information 913 includes unique information 913 such as a customer registration number, an order identifier 915 to uniquely identify each order of the customer from the customer computer, and order contents information 916 specifying an item name of the ordered item, the number of items, specifications of the item, and the like. The order receiving computer 901 conducts operations, for example, receives the order (step 905), registers the order (906), and confirms the stock (step 907). However, since a system failure may occur due to communication quality of the internet and/or a concentrated load of a large number of accesses to the order receiving computer, the order information 913 transmitted from the customer is not necessarily registered in the order receiving computer 901. Therefore, by delivering an identifier including the unique information 914 and the order identifier information 915 delivered together with the order information 913 to the order receiving computer 901, it is possible to prevent the problem in which an item is twice ordered or an item ordered cannot be delivered.

### INDUSTRIAL APPLICABILITY

As above, according to the present invention, since a job identifier registered by the client computer can be recognized by the server computer, the server computer can thereafter cope with a request from the client computer. This removes the disadvantage that a job is missed due to a network failure or the like.

## Claims

1. A processing status enquiry method of inquiring a status of processing executed by another computer, comprising the steps of:
sending a processing which a first computer requests a second computer to perform and a first identifier of the processing to the second computer; and
sending the first identifier to the second computer when the first computer inquires the second computer of a status of the processing requested.

2. A processing status enquiry method according to claim 1, further comprising the step of generating by the first computer a first identifier and storing by the first computer the first identifier on a hard disk connected to the first computer.

3. A processing status enquiry method according to claim 1, wherein at least one of the first identifier and said processing includes information unique to said first computer.

4. A processing status enquiry method according to claim 3, wherein said unique information is an internet protocol (IP) address of the first computer.

5. A processing status enquiry method according to claim 1, further comprising the steps of:
generating by the second computer a second identifier corresponding to a processing request received from the first computer and sending the second identifier to the first computer; and
inquiring, by the first computer, the second computer of a status of said processing using at least one of the first and second identifiers.

6. A processing status enquiry method according to claim 1, wherein when the first computer requests the second computer to perform the processing, it is possible, even without any enquiry from the first computer, to specify information regarding a status of the processing for which the second computer notifies the status of the processing.

7. A processing status enquiry method according to claim 1, wherein when the first computer requests the second computer to perform the processing, it is possible to specify information regarding a notification destination to which the second computer notifies a status of the processing.

8. A processing status enquiry system for inquiring a status of processing executed by another computer, comprising:
a first computer for sending a processing which the first computer requests a second computer to perform and a first identifier corresponding to said processing, to the second computer; and
a second computer notifying, in response to an status inquiry of the processing which is received from the first computer and which includes the first identifier, a status of the processing to the first computer.

9. A processing status enquiry client computer for inquiring a status of processing performed by a server computer, comprising:
an identifier generating section for generating a first identifier corresponding to a processing for which an enquiry is issued to the server computer; and
an enquiry section for sending, upon inquiring the server computer of a status of the processing, the first identifier to the server computer.

10. A processing status enquiry client computer according to claim 9, wherein at least one of the first identifier and said processing includes information unique to said client.

11. A processing status enquiry client computer according to claim 10, wherein said unique information is an IP address of said client computer.

12. A sever computer responsive to a processing status enquiry from a client computer, comprising:
a receiving section receiving a first identifier corresponding to a processing which is requested from the client computer;
an information acquiring section acquiring, in response to a status enquiry for the processing which is received from the client computer and which includes the first identifier, information regarding a status of said processing corresponding to the first identifier; and
a transmitting section sending the information to the client computer.

13. A server computer responsive to a processing status enquiry according to claim 12, further comprising:
an identifier generating section for generating a second identifier corresponding to said processing; and
a transmitting section for sending the second identifier to the client computer.

14. A server computer responsive to a processing status enquiry according to claim 13, wherein:
said receiving section receives at least one of the first and second identifiers;
said information acquiring section acquires information regarding a state of processing corresponding to said identifier; and
said transmitting section sends said information to the client computer.

15. A server computer responsive to a processing status enquiry according to claim 12, further comprising a transmitting section for sending the status of the processing to the client computer if the status has been changed.

16. A server computer responsive to a processing status enquiry according to claim 12, further comprising storage means for storing, if the status has been changed, a client computer to which the status of the processing is to be transmitted.

17. A server computer responsive to a processing status enquiry according to claim 12, wherein said server computer is an order receiving computer in an electronic commerce system.

18. A recording medium storing thereon a computer-readable program for implementing the method according to claims 1 to 7.
